(19) **Europäisches Patentamt / European Patent Office / Office européen des brevets**

(11) **EP 3 116 140 A2**

(12) # EUROPEAN PATENT APPLICATION
published in accordance with Art. 153(4) EPC

(43) Date of publication:
**11.01.2017 Bulletin 2017/02**

(21) Application number: **14884360.0**

(22) Date of filing: **15.08.2014**

(51) Int Cl.:
***H04B 7/06*** *(2006.01)*

(86) International application number:
**PCT/CN2014/084568**

(87) International publication number:
**WO 2015/131494 (11.09.2015 Gazette 2015/36)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **04.03.2014 CN 201410077620**

(71) Applicant: **ZTE Corporation**
**Shenzhen, Guangdong 518057 (CN)**

(72) Inventors:
• **CHEN, Yijian**
  **Shenzhen**
  **Guangdong518057 (CN)**

• **LU, Zhaohua**
  **Shenzhen**
  **Guangdong 518057 (CN)**
• **ZHAO, Jing**
  **Shenzhen**
  **Guangdong 518057 (CN)**
• **XIAO, Huahua**
  **Shenzhen**
  **Guangdong 518057 (CN)**
• **YU, Guanghui**
  **Shenzhen**
  **Guangdong 518057 (CN)**

(74) Representative: **Brevalex**
  **95, rue d'Amsterdam**
  **75378 Paris Cedex 8 (FR)**

(54) **CHANNEL INFORMATION FEEDBACK METHOD, AND PILOT AND BEAM TRANSMISSION METHOD, SYSTEM AND DEVICE**

(57)    Disclosed are a channel information feedback method, pilot and beam transmission methods, systems and devices. The channel information feedback method includes that: a base station transmits M types of pilot signals, the M types of pilot signals corresponding to M pilot ports respectively; the base station configures N pilot ports in the M pilot ports for a terminal through signalling, M being a positive integer and N being a positive integer smaller than M; and the terminal receives and detects the pilot signals from the N pilot ports, selects K pilot ports from the N pilot ports according to received signal quality, and feeds back channel information of channels formed by the K pilot ports and the terminal, K being a positive integer smaller than N.

Fig. 1

a base station transmits M types of pilot signals, the M types of pilot signals corresponding to M pilot ports respectively — 101

the base station configures N pilot ports in the M pilot ports for a terminal through signalling, M being a positive integer and N being a positive integer smaller than M — 102

the terminal receives and detects the pilot signals from the N pilot ports — 103

the terminal selects K pilot ports from the N pilot ports according to received signal quality, and feeds back channel information of channels formed by the K pilot ports and the terminal, K being a positive integer smaller than N — 104

**EP 3 116 140 A2**

## Description

### TECHNICAL FIELD

The present disclosure relates to a channel information feedback technology in communications, and in particular to a channel information feedback method and pilot and beam transmission methods, systems and devices.

### BACKGROUND

In a wireless communication system, a transmitter and a receiver achieve a higher data transmission rate by means of multiple antennas in a spatial multiplexing manner. Compared with a common spatial multiplexing manner, an enhanced spatial multiplexing manner refers to feeding back channel information to a transmitter by a receiver and performing data transmission according to the obtained channel information by adopting a transmission precoding technology by the transmitter, thereby greatly improving transmission performance. For single-user Multi-Input Multi-Output (MIMO), channel characteristic vector information is directly used for precoding; and for Multi-User-MIMO (MU-MIMO), more accurate channel information is required.

In some technologies consistent with 4th-Generation (4G) of mobile phone mobile communications standards, such as standard specification of Long Term Evolution (LTE) 802.16m, a simpler single-codebook feedback method is mainly adopted for feedback of channel information, and performance of a transmission precoding technology for MIMO depends more on codebook feedback accuracy. A basic principle of codebook-based channel information quantized feedback is as follows.

If limited feedback channel capacity is B bps/Hz, the number N of available code words is $2^B$. A characteristic vector space of a channel matrix is quantized to form a codebook space $\Re = \left\{ F_1, F_2 ... F_N \right\}$. Both a transmitter and a receiver store or generate the codebook in real time. The receiver adopts the obtained channel matrix H, selects a code work $\hat{F}$ most matched with a channel from $\Re$ according to a certain criterion, and feeds back a sequence number i of the code word to the transmitter. Here, the sequence number of the code word refers to a Precoding Matrix Indicator (PMI). The transmitter queries the corresponding precoding code word $\hat{F}$ to obtain channel information according to the sequence number i. Here, $\hat{F}$ represents characteristic vector information of the channel.

Along with rapid development of a wireless communication technology, wireless applications at user ends become increasingly rich, which promotes rapid increase of wireless data services but also brings great challenges to a radio access network. A multi-antenna technology is a key technology for dealing with the challenge of explosive increase of wireless data services. At present, a multi-antenna technology supported by 4G only supports a horizontal-dimension beamforming technology of maximally 8 ports. The multi-antenna technology is evolved mainly for: ① a higher beamforming/precoding gain; ② a larger spatial multiplexing layer number and lower interlayer interference; ③ more comprehensive coverage; and ④ lower inter-station interference. Massive MIMO is the most important technology for MIMO evolution in next-generation wireless communications.

For a massive MIMO technology, a base station side is configured with a massive antenna array, for example, 100 antennas and even more. An MU-MIMO technology is utilized to simultaneously multiplex multiple users at the same frequency during data transmission. Generally, the number of the antennas is about 5 to 10 times the number of the multiplexed users. No matter for strongly correlated channels in a line-of-sight environment or uncorrelated channels under rich scattering, a correlation coefficient between channels of any two users is exponentially attenuated along with increase of the number of the antennas. For example, when the base station side is configured with 100 antennas, a correlation coefficient between channels of any two users approaches 0, that is, channels corresponding to multiple users are approximately orthogonal. On the other aspect, a massive array may bring a considerable array gain and diversity gain.

For a massive MIMO technology, with introduction of a large number of antennas, each antenna is required to send Channel State Information-Reference Symbol (CSI-RS). A terminal detects the CSI-RSs, performs channel estimation to obtain a channel matrix corresponding to each transmission resource, obtains optimal precoding vectors of each frequency-domain sub-band on a baseband and optimal broadband transmission layer number information according to the channel matrixes and performs feedback on the basis of a codebook feedback technology. Such a manner has many serious problems when being applied to the massive MIMO. For example, pilot overhead may be increased along with increase of the number of antennas. In addition, when a conventional codebook feedback technology is adopted for feedback, an adopted codebook is required to include many code words and it is difficult to select the code words, which increases complexity of the terminal and makes it difficult to implement; and codebook feedback overhead is very high, which causes high overhead of an uplink. It is difficult to achieve higher performance in a massive antenna system by means of the codebook feedback technology.

From the above, for a massive antenna system, efficiency and complexity of channel information feedback are important technical problems. At present, there is yet no effective method capable of improving efficiency of channel information feedback and reducing feedback complexity, thereby seriously influencing industrial practicability of the massive MIMO.

**SUMMARY**

In order to solve the related technical problems, the embodiments of the present disclosure provide a channel information feedback method and pilot and beam transmission methods, systems and devices.

A channel information feedback method provided by the embodiments of the present disclosure includes that:

a base station transmits M types of pilot signals, the M types of pilot signals corresponding to M pilot ports respectively; the base station configures N pilot ports in the M pilot ports for a terminal through signalling, M being a positive integer and N being a positive integer smaller than M; and

the terminal receives and detects the pilot signals from the N pilot ports, selects K pilot ports from the N pilot ports according to received signal quality, and feeds back channel information of channels formed by the K pilot ports and the terminal, K being a positive integer smaller than N.

Preferably, the channel information may include at least one of: index information of the K pilot ports, amplitude proportion information among the K pilot ports, phase difference information among the K pilot ports, received power information of the K pilot ports and signal to interference plus noise ratio information of the K pilot ports.

Preferably, the method may further include that:

virtualization is performed to form the K pilot ports through the same group of antennas, wherein each pilot port in the K pilot ports may correspond to a set of virtualized precoding weights.

Preferably, the method may further include that:

virtualization is performed to form the N pilot ports through the same group of antennas, wherein each pilot port in the N pilot ports may correspond to a set of virtualized precoding weights.

Preferably, the method may further include that:

the base station determines the N pilot ports according to channel statistic information fed back by the terminal, wherein the channel statistic information may be information of a correlation matrix; and the virtualized precoding weights corresponding to the N pilot ports may be characteristic vectors of the correlation matrix.

Preferably, the virtualized precoding weights corresponding to the N pilot ports may be: Discrete Fourier Transform (DFT) vectors $v_k$, or Kronecker products $f(v_k, v_l)$ of the DFT vectors, wherein

$$v_k = \begin{bmatrix} 1 & e^{j\phi_k} & \dots & e^{j(n-1)\phi_k} \end{bmatrix}^H$$

$$f(v_k, v_l) = v_k \otimes v_l \ \text{ or } \ f(v_k, v_l) = \begin{bmatrix} v_k \\ v_l \end{bmatrix},$$

*where k* and *l* are positive *integers, j* is an imaginary *unit, n* is a positive integer more than 1 and $\phi_k$ is a phase parameter; and $[\ ]^H$ represents conjugate transpose operation and $\otimes$ is a Kronecker product symbol.

Preferably, the method may further include that:

the terminal selects the K pilot ports from the N pilot ports according to a power threshold configured by the base station, wherein the power threshold may be a relative threshold or an absolute threshold.

Preferably, the method may further include that:

the base station configures the N pilot ports in the M pilot ports for the terminal according to terminal information reported by the terminal.

Preferably, the method may further include that:

the terminal feeds back selection information of the pilot ports, the selection information of the pilot ports being jointly coded by the number of selected pilot ports and identifiers of the selected pilot ports, wherein selection probabilities of different pilot ports may be different, and different numbers of the pilot ports may correspond to different status bits.

A pilot transmission method provided by the embodiments of the present disclosure includes that:

a base station transmits M types of pilot signals, the M types of pilot signals corresponding to M pilot ports respectively; and the base station configures N pilot ports in the M pilot ports for a terminal through signalling, M being a positive integer and N being a positive integer smaller than M.

Preferably, the method may further include that:

virtualization is performed to form the N pilot ports through the same group of antennas, wherein each pilot port in the N pilot ports may correspond to a set of virtualized precoding weights.

Preferably, the method may further include that:

the base station determines the N pilot ports according to channel statistic information fed back by the terminal, wherein the channel statistic information may be information of a correlation matrix; and the virtualized precoding weights corresponding to the N pilot ports may be characteristic vectors of the correlation matrix.

Preferably, the virtualized precoding weights corresponding to the N pilot ports may be: DFT vectors $v_k$, or Kronecker products $f(v_k, v_l)$ of the DFT vectors, wherein

$$v_k = \begin{bmatrix} 1 & e^{j\phi_k} & ... & e^{j(n-1)\phi_k} \end{bmatrix}^H$$

$$f(v_k, v_l) = v_k \otimes v_l \quad \text{or} \quad f(v_k, v_l) = \begin{bmatrix} v_k \\ v_l \end{bmatrix},$$

where $k$ and $l$ are positive *integers, j* is an imaginary *unit, n* is a positive integer more than 1 and $\phi_k$ is a phase parameter; and $[\ ]^H$ represents a conjugate transpose operation and $\otimes$ is a Kronecker product symbol.

Preferably, the method may further include that:

the base station configures the N pilot ports in the M pilot ports for the terminal according to terminal information reported by the terminal.

A channel information feedback method provided by the embodiments of the present disclosure includes that:

a terminal receives and detects pilot signals from N pilot ports configured by a base station, selects K pilot ports from the N pilot ports according to received signal quality, and feeds back channel information of channels formed by the K pilot ports and the terminal, K being a positive integer smaller than N.

Preferably, the channel information may include at least one of: index information of the K pilot ports, amplitude proportion information among the K pilot ports, phase difference information among the K pilot ports, received power information of the K pilot ports and signal to interference plus noise ratio information of the K pilot ports.

Preferably, the method may further include that:

the terminal selects the K pilot ports from the N pilot ports according to a power threshold configured by the base station, wherein the power threshold may be a relative threshold or an absolute threshold.

Preferably, the method may further include that:

the terminal feeds back selection information of the pilot ports, the selection information of the pilot ports being jointly coded by the number of the selected pilot ports and identifiers of the selected pilot ports, wherein selection probabilities of different pilot ports may be different, and different numbers of the pilot ports may correspond to different status bits.

Preferably, the method may further include that:

virtualization is performed to form the K pilot ports through the same group of antennas, wherein each pilot port in the K pilot ports may correspond to a set of virtualized precoding weights.

A beam transmission method provided by the embodiments of the present disclosure includes that:

a base station preselects P beam weights, processes the P beam weights to obtain P new beams according to a channel correlation matrix fed back by a terminal, and transmits the P new beams to the terminal; and

the terminal selects Q beams from the P new beams, and feeds back the Q beams to the base station.

Preferably, the channel correlation matrix may be a superposition and combination of correlation matrix information of multiple terminals.

Preferably, the P beam weights may be: P DFT vectors or functions of two DFT vectors.

A channel information feedback system provided by the embodiments of the present disclosure includes a base station and a terminal, wherein

the base station is configured to transmit M types of pilot signals, the M types of pilot signals corresponding to M pilot ports respectively, and configure N pilot ports in the M pilot ports for the terminal through signalling, M being a positive integer and N being a positive integer smaller than M; and

the terminal is configured to receive and detect the pilot signals from the N pilot ports, select K pilot ports from the N pilot ports according to received signal quality, and feed back channel information of channels formed by the K pilot ports and the terminal, K being a positive integer smaller than N.

Preferably, the channel information may include at least one of: index information of the K pilot ports, amplitude proportion information among the K pilot ports, phase difference information among the K pilot ports, received power information of the K pilot ports and signal to interference plus noise ratio information of the K pilot ports.

Preferably, the terminal may further be configured to perform virtualization to form the K pilot ports through the same group of antennas, wherein each pilot port in the K pilot ports may correspond to a set of virtualized precoding weights.

Preferably, the base station may further be configured to perform virtualization to form the N pilot ports through the same group of antennas, wherein each pilot port in the N pilot ports may correspond to a set of virtualized precoding weights.

Preferably, the base station may further be configured to determine the N pilot ports according to channel statistic information fed back by the terminal, wherein the channel statistic information may be information of a correlation matrix; and the virtualized precoding weights corresponding to the N pilot ports may be characteristic vectors of the correlation matrix.

Preferably, the virtualized precoding weights corresponding to the N pilot ports may be: DFT vectors $v_k$, or Kronecker products $f(v_k, v_l)$ of the DFT vectors, wherein

$$v_k = \begin{bmatrix} 1 & e^{j\phi_k} & ... & e^{j(n-1)\phi_k} \end{bmatrix}^H$$

$$f(v_k, v_l) = v_k \otimes v_l \quad \text{or} \quad f(v_k, v_l) = \begin{bmatrix} v_k \\ v_l \end{bmatrix},$$

where k and l are positive *integers, j* is an imaginary *unit, n* is a positive integer more than 1 and $\phi_k$ is a phase parameter; and $[\ ]^H$ represents a conjugate transpose operation and $\otimes$ is a Kronecker product symbol.

Preferably, the terminal may further be configured to select the K pilot ports from the N pilot ports according to a power threshold configured by the base station, wherein the power threshold may be a relative threshold or an absolute threshold.

Preferably, the base station may further be configured to configure the N pilot ports in the M pilot ports for the terminal according to terminal information reported by the terminal.

Preferably, the terminal may further be configured to feed back selection information of the pilot ports, the selection information of the pilot ports being jointly coded by the number of the selected pilot ports and identifiers of the selected pilot ports, wherein selection probabilities of different pilot ports may be different, and different numbers of the pilot ports may correspond to different status bits.

A base station provided by the embodiments of the present disclosure includes a transmission unit and a configuration unit, wherein

the transmission unit is configured to transmit M types of pilot signals, the M types of pilot signals corresponding to M pilot ports respectively; and

the configuration unit may be configured to configure N pilot ports in the M pilot ports for a terminal through signalling, M being a positive integer and N being a positive integer smaller than M.

Preferably, the base station may further include: a virtualization unit, configured to perform virtualization to form the N pilot ports through the same group of antennas, wherein each pilot port in the N pilot ports may correspond to a set of virtualized precoding weights.

Preferably, the configuration unit may further be configured to determine the N pilot ports according to channel statistic information fed back by the terminal, wherein the channel statistic information may be information of a correlation matrix; and the virtualized precoding weights corresponding to the N pilot ports may be characteristic vectors of the correlation matrix.

Preferably, the virtualized precoding weights corresponding to the N pilot ports may be: DFT vectors $v_k$, or Kronecker products $f(v_k, v_l)$ of the DFT vectors, wherein

$$v_k = \begin{bmatrix} 1 & e^{j\phi_k} & ... & e^{j(n-1)\phi_k} \end{bmatrix}^H$$

$$f(v_k, v_l) = v_k \otimes v_l \quad \text{or} \quad f(v_k, v_l) = \begin{bmatrix} v_k \\ v_l \end{bmatrix},$$

where k and l are positive *integers, j* is an imaginary *unit, n* is a positive integer more than 1 and $\phi_k$ is a phase parameter; and $[\ ]^H$ represents conjugate transpose operation and $\otimes$ is a Kronecker product symbol.

Preferably, the configuration unit may further be configured to configure the N pilot ports in the M pilot ports for the terminal according to terminal information reported by the terminal.

A terminal provided by the embodiments of the present disclosure includes a receiving unit, a selection unit and a feedback unit, wherein

the receiving unit is configured to receive and detect pilot signals from N pilot ports configured by a base station;

the selection unit may be configured to select K pilot ports from the N pilot ports according to received signal quality; and

the feedback unit may be configured to feed back channel information of channels formed by the K pilot ports and the terminal, K being a positive integer smaller than N.

Preferably, the channel information may include at least one of: index information of the K pilot ports, amplitude proportion information among the K pilot ports, phase difference information among the K pilot ports, received power information of the K pilot ports and signal to interference plus noise ratio information of the K pilot ports.

Preferably, the selection unit may further be configured to select the K pilot ports from the N pilot ports according to a power threshold configured by the base station, wherein the power threshold may be a relative threshold or an absolute threshold.

Preferably, the feedback unit may further be configured to feed back selection information of the pilot ports, the selection information of the pilot ports being jointly coded by the number of the selected pilot ports and identifiers of the selected pilot ports, wherein selection probabilities of different pilot ports may be different, and different numbers of the pilot ports may correspond to different status bits.

Preferably, the terminal may further include: a virtualization unit, configured to perform virtualization to form the K pilot ports through the same group of antennas, wherein each pilot port in the K pilot ports may correspond to a set of virtualized precoding weights.

A beam transmission system provided by the embodiments of the present disclosure includes a base station and a terminal, wherein

the base station is configured to preselect P beam weights, process the P beam weights to obtain P new beams according to a channel correlation matrix fed back by the terminal, and send the P new beams to the terminal; and
the terminal is configured to select Q beams from the P new beams, and feed back the Q beams to the base station.

Preferably, the channel correlation matrix may be a superposition and combination of correlation matrix information of multiple terminals.

Preferably, the P beam weights may be: P DFT vectors or functions of two DFT vectors.

According to the technical solutions of the embodiments of the present disclosure, the base station transmits the M types of pilot signals, the M types of pilot signals corresponding to the M pilot ports respectively; and the base station configures the N pilot ports in the M pilot ports for the terminal through the signalling, M being a positive integer and N being a positive integer smaller than M, so that a dimension of channel information of the M pilot ports is reduced to a dimension of channel information of the N pilot ports. As such, the terminal may select the K pilot ports from the N pilot ports to feed back the channel information in a subspace determined on the basis of correlation. Moreover, the terminal selects the K pilot ports from the N pilot ports to feed back the channel information, so that the dimension of the channel information may further be reduced, and channel information feedback overhead is greatly reduced.

## BRIEF DESCRIPTION OF THE DRAWINGS

Fig. 1 is a flowchart showing a channel information feedback method according to embodiment 1 of the present disclosure;

Fig. 2 is a flowchart showing a pilot transmission method according to embodiment 2 of the present disclosure;

Fig. 3 is a flowchart showing a channel information feedback method according to embodiment 3 of the present disclosure;

Fig. 4 is a flowchart showing a beam transmission method according to embodiment 4 of the present disclosure;

Fig. 5 is a structural diagram illustrating a channel information feedback system according to embodiment 1 of the present disclosure;

Fig. 6 is a structural diagram illustrating a base station according to embodiment 2 of the present disclosure;

Fig. 7 is a structural diagram illustrating a terminal according to embodiment 3 of the present disclosure;

Fig. 8 is a structural diagram illustrating a beam transmission system according to embodiment 4 of the present disclosure;

Fig. 9 is a diagram illustrating precoding by a base station according to an embodiment of the present disclosure;

Fig. 10 is a diagram illustrating DFT vector precoding according to an embodiment of the present disclosure;

Fig. 11 is a diagram illustrating channel correlation matrix precoding according to an embodiment of the present disclosure; and

Fig. 12 is a diagram illustrating beam-weight-based channel information feedback according to an embodiment of the present disclosure.

## DETAILED DESCRIPTION

In order to completely understand characteristics and technical contents of the embodiments of the present disclosure, implementation of the embodiments of the present disclosure will be elaborated below with reference to the drawings in detail, and the appended drawings are only intended for description as references and not intended to limit the embodiments of the present disclosure.

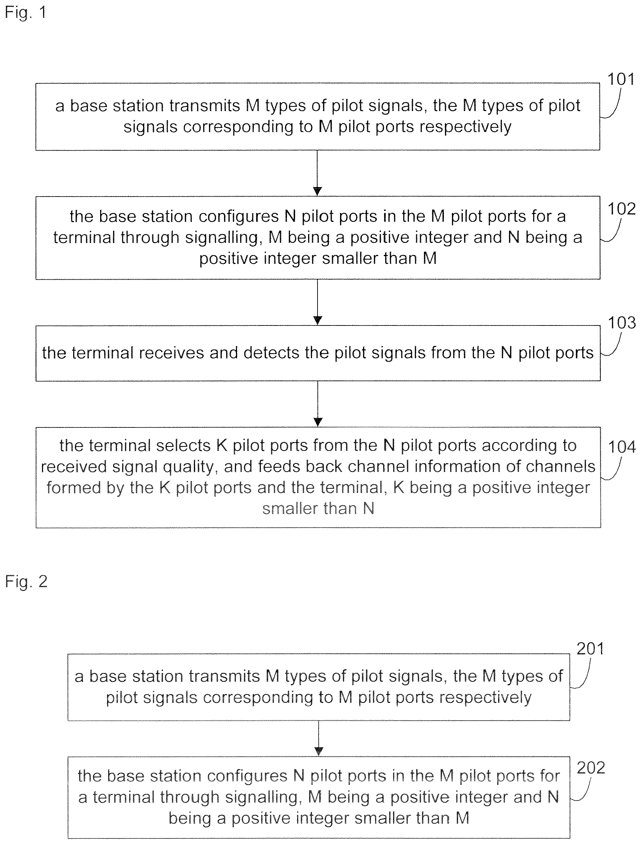

Fig. 1 is a flowchart showing a channel information feedback method according to embodiment 1 of the present disclosure, and the channel information feedback method in the example is applied to a channel information feedback system. As shown in Fig. 1, the channel information feedback method in the example includes the following steps.

Step 101: a base station transmits M types of pilot signals, the M types of pilot signals corresponding to M pilot ports respectively.

Here, M is an integer more than 1, and for example, M is 64.

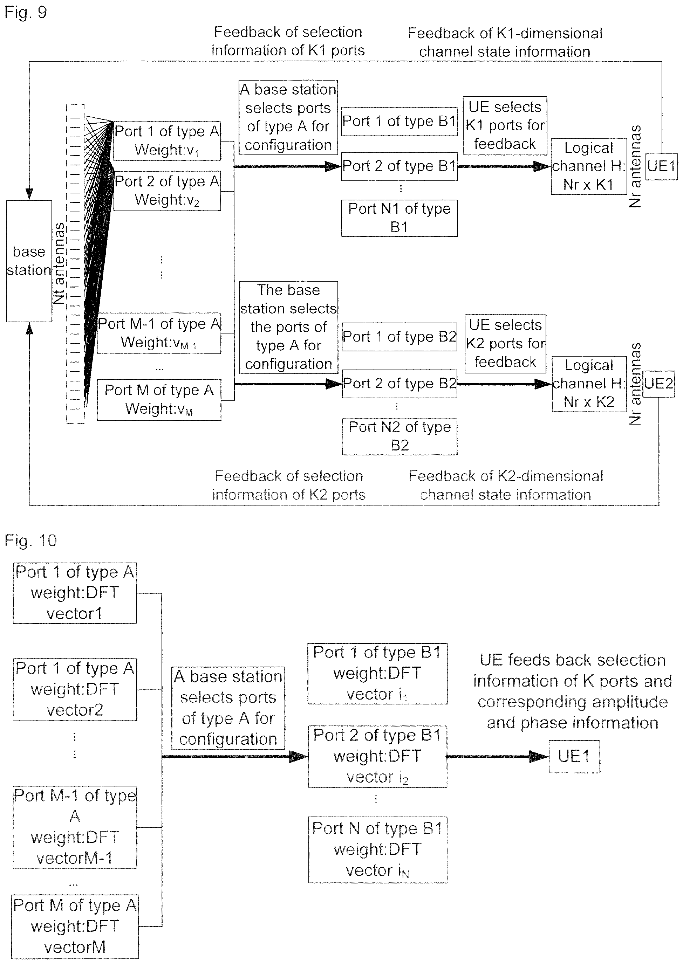

Specifically, referring to Fig. 9, the base station has Nt transmission antennas which are the same, wherein Nt is an integer more than 1. Each transmission antenna transmits a path of signal, and the Nt transmission antennas send Nt paths of signals. In the embodiment, the Nt paths of signals sent by the Nt transmission antennas are virtualized to obtain the M types of pilot signals. Here, virtualization specifically refers to precoding, that is, the signals of each of the Nt paths are multiplied by Nt corresponding weights to obtain a type of pilot signals. As such, Nt weights form a set of weight vectors with the dimension of Nt, and each type of pilot signals may correspond different sets of weight vectors, that is, the M types of pilot signals correspond to M sets of weight vectors. It is noted that the pilot signals precoded by the weight vectors are directional because the weight vectors are directional.

Step 102: the base station configures N pilot ports in the M pilot ports for a terminal through signalling, M being a positive integer and N being a positive integer smaller than M.

Preferably, the method further includes that:

the base station configures the N pilot ports in the M pilot ports for the terminal according to terminal information reported by the terminal.

Preferably, the method further includes that:

virtualization is performed to form the N pilot ports through the same group of antennas, wherein each pilot port in the N pilot ports corresponds to a set of virtualized precoding weights.

Preferably, the method further includes that:

the base station determines the N pilot ports according to channel statistic information fed back by the terminal, wherein the channel statistic information is information of correlation matrix; and the virtualized precoding weights corresponding to the N pilot ports are characteristic vectors of the correlation matrix.

Preferably, the virtualized precoding weights corresponding to the N pilot ports are: DFT vectors $v_k$, or Kronecker products $f(v_k, v_l)$ of the DFT vectors, wherein

$$v_k = \begin{bmatrix} 1 & e^{j\phi_k} & ... & e^{j(n-1)\phi_k} \end{bmatrix}^H$$

$$f(v_k, v_l) = v_k \otimes v_l \quad \text{or} \quad f(v_k, v_l) = \begin{bmatrix} v_k \\ v_l \end{bmatrix},$$

*where k and l are positive integers, j is an imaginary unit, n is a positive integer more than 1 and $\phi_k$ is a phase parameter;* and $[\,]^H$ represents a conjugate transpose operation and $\otimes$ is a Kronecker product symbol.

Specifically, referring to Fig. 10, preset beam weights may be DFT vectors, and the M types of pilot signals, i.e. M DFT vectors corresponding to the M pilot ports, are shown in formula (1):

$$v_1 = \begin{bmatrix} 1 & e^{j\phi_1} & ... & e^{j(P1-1)\phi_1} \end{bmatrix}^H$$
$$v_2 = \begin{bmatrix} 1 & e^{j\phi_2} & ... & e^{j(P2-1)\phi_2} \end{bmatrix}^H \qquad (1)$$
$$...$$
$$v_M = \begin{bmatrix} 1 & e^{j\phi_M} & ... & e^{j(PM-1)\phi_M} \end{bmatrix}^H$$

where $v_1$, $v_2$, ..., $v_M$ represent M DFT vectors; P1, P2, ..., PM are all equal to Nt; $\phi_1$, $\phi_2$, ..., $\phi_M$ are uniformly quantized phase parameters from 0 to $2\pi$; and $[...]^H$ represents conjugate transpose.

The DFT vectors utilize a multipath principle, that is, the DFT vectors correspond to optimal beam weights of paths. Since a channel is synthesized by multiple paths, for the M types of pilot signals, some pilot ports receive stronger pilot signals, meaning that multipath components are stronger; and some pilot ports receive weaker pilot signals, meaning that the multipath components are weaker.

In the solution, the Nt transmission antennas form a linear array. When the Nt transmission antennas form an antenna array of another form, such as a two-dimensional antennas array, the beam weights corresponding to the M types of pilot signals adopt a form of function of two DFT vectors, as shown in formula (2):

$$f(v_i, v_j) = v_i \otimes v_j \qquad (2)$$

where $v_i$ and $v_j$ are shown in formula (1), and a product of $Pi$ corresponding to $v_i$ and $Pj$ corresponding to $v_j$ is equal to the number Nt of the transmission antennas.

The beam weights corresponding to the M types of pilot signals of the two-dimensional antenna array may also be obtained by formula (3):

$$f(v_k, v_l) = \begin{bmatrix} v_k \\ v_l \end{bmatrix} \qquad (3)$$

where $v_i$ and $v_j$ are shown in formula (1), and a product of $Pi$ corresponding to $v_i$ and $Pj$ corresponding to $v_j$ is equal to half of the number Nt/2 of the transmission antennas.

Here, not every terminal is required to detect the M pilot ports corresponding to the M types of pilot signals, and the base station may configure some ports for each terminal to detect. For example, for User Equipment 1 (UE1), N1=16 pilot ports may be configured for detection, and for UE2, N2=8 pilot ports may be configured for detection. Specific pilot ports may be determined by the base station according to position information of the terminal or some rough channel information reported by the terminal.

Step 103: the terminal receives and detects the pilot signals from the N pilot ports.

Specifically, the base station transmits port information of the N pilot ports to the terminal. Further, the terminal detects the N types of pilot signals from the N pilot ports to obtain received power corresponding to the N types of pilot signals according to the port information. The terminal selects K pilot ports from the N pilot ports on the basis of the received power corresponding to the N types of pilot signals. The terminal feeds back channel information of the K pilot ports to the base station.

Specifically, the terminal receives the port information of the N pilot ports from the base station. Here, the base station selects the N pilot ports from the M generated pilot ports according to the position information of the terminal or the channel information, wherein N<M.

Step 104: the terminal selects K pilot ports from the N pilot ports according to received signal quality, and feeds back channel information of channels formed by the K pilot ports and the terminal, K being a positive integer smaller than N.

Preferably, the method further includes that:

the terminal selects the K pilot ports from the N pilot ports according to a power threshold configured by the base station, wherein the power threshold is a relative threshold or an absolute threshold.

After acquiring the port information sent by the base station, the terminal detects the pilot signals at corresponding port positions to obtain the received power corresponding to the N types of pilot signals. Specifically, when N is 8,
the terminal detects that received power of pilot signal 0 is $a_0$ dBm;
the terminal detects that received power of pilot signal 1 is $a_1$ dBm;
the terminal detects that received power of pilot signal 2 is $a_2$ dBm;
......
the terminal detects that received power of pilot signal 7 is $a_7$ dBm.

Preferably, the channel information includes at least one of: index information of the K pilot ports, amplitude proportion information among the K pilot ports, phase difference information among the K pilot ports, received power information of the K pilot ports and signal to interference plus noise ratio information of the K pilot ports.

Specifically, the received power corresponding to the N types of pilot signals is compared with a preset threshold value respectively;
when the received power is more than or equal to the threshold value, it is determined that the pilot ports corresponding to the received power are ports of a first type;
when the received power is lower than the threshold value, it is determined that the pilot ports corresponding to the received power are ports of a second type; and

the first type of ports are selected from the N pilot ports, the number of the ports of the first type being K.

Alternatively, maximum received power in the received power corresponding to the N types of pilot signals is determined;

the received power corresponding to the N types of pilot signals is compared with the maximum received power respectively;

when a radio of the received power to the maximum received power is more than or equal to a preset threshold value, it is determined that the pilot ports corresponding to the received power are ports of the first type;

when the radio of the received power to the maximum received power is lower than the preset threshold value, it is determined that the pilot ports corresponding to the received power are ports of the second type; and

the first type of ports are selected from the N pilot ports, the number of the ports of the first type being K.

Preferably, the base station presets a maximum pilot port number, and K is less than or equal to the maximum pilot port number.

In the solution, the two selection manners of selecting the K pilot ports from the N pilot ports may be combined, specifically as follows: when the received power of the pilot signals of the selected pilot ports is more than or equal to the threshold value and the radios of the received power of the pilot signals of the selected pilot ports to the maximum received power are more than or equal to the preset threshold value, the pilot ports are ports of the first type.

Preferably, the method further includes that:

virtualization is performed to form the K pilot ports through the same group of antennas, wherein each pilot port in the K pilot ports corresponds to a set of virtualized precoding weights.

Preferably, the method further includes that:

the terminal feeds back selection information of the pilot ports, the selection information of the pilot ports being jointly coded by the number of the selected pilot ports and identifiers of the selected pilot ports, wherein selection probabilities of different pilot ports are different, and different numbers of the pilot ports correspond to different status bits.

In the solution, after the K pilot ports are selected from the N pilot ports, selection information of the K pilot ports is also reported. Specifically, the probability of selecting each pilot port is different from each other. For a part of the pilot ports, the selection probability may be high while for another part of the pilot ports, the selection probability may be low. As such, the probability for selecting the pilot ports may be represented by coding. For example, if K=2 pilot ports are selected from N=8 pilot ports, coding information is shown in Table 1.

Table 1

| 0000 | Port1, Port2 | 1000 | Port2, Port4 |
|------|------------|------|------------|
| 0001 | Port1, Port3 | 1001 | Port2, Port5 |
| 0010 | Port1, Port4 | 1010 | Port2, Port6 |
| 0011 | Port1, Port5 | 1011 | Port2, Port7 |
| 0100 | Port1, Port6 | 1100 | Port2, Port8 |
| 0101 | Port1, Port7 | 1101 | Port3, Port4 |
| 0110 | Port1, Port8 | 1110 | Port3, Port5 |
| 0111 | Port2, Port3 | 1111 | Port4, Port5 |

For example, if K=3 pilot ports are selected from N=8 pilot ports, coding information is shown in Table 2.

Table 2

| 0000 | Port1, Port2, Port3 | 1000 | Port1, Port3, Port6 |
|------|-------------------|------|-------------------|
| 0001 | Port1, Port2, Port4 | 1001 | Port1, Port3, Port7 |
| 0010 | Port1, Port2, Port5 | 1010 | Port1, Port3, Port8 |
| 0011 | Port1, Port2, Port6 | 1011 | Port2, Port3, Port4 |

(continued)

| 0100 | Port1, Port2, Port7 | 1100 | Port2, Port3, Port5 |
|------|---------------------|------|---------------------|
| 0101 | Port1, Port2, Port8 | 1101 | Port2, Port3, Port6 |
| 0110 | Port1, Port3, Port4 | 1110 | Port2, Port3, Port7 |
| 0111 | Port1, Port3, Port5 | 1111 | Port2, Port3, Port8 |

In addition, the probabilities of numbers of the selected pilot ports may also be different. For example, the probability that the number of the selected pilot port is 2 is different from the probability that the number of the selected pilot ports is 4. Thus, joint coding with respect to the number of pilot ports and a selection probability of the pilot ports may also be implemented to reduce coding overhead, coding information being shown in Table 3.

Table 3

| 0000 | Port1, Port2 | 1000 | Port2, Port4 |
|------|--------------|------|--------------|
| 0001 | Port1, Port3 | 1001 | Port3, Port4 |
| 0010 | Port1, Port4 | 1010 | Port3, Port5 |
| 0011 | Port1, Port5 | 1011 | Port4, Port5 |
| 0100 | Port1, Port6 | 1100 | Port1, Port2, Port3 |
| 0101 | Port1, Port7 | 1101 | Port1, Port2, Port4 |
| 0110 | Port1, Port8 | 1110 | Port1, Port3, Port4 |
| 0111 | Port2, Port3 | 1111 | Port2, Port3, Port4 |

The phase difference information is information about phase differences calculated after beam signals received by respective antenna are averaged.

Specifically, for the selected pilot ports, the terminal feeds back amplitude/power information and phase information of the pilot ports. Herein, relative information among the pilot ports is preferably fed back, such as amplitude/power proportions and the phase difference information. The following manner may be adopted for the amplitude/power proportions: a pilot port with the highest power is indicated, and a ratio of an amplitude or power of the pilot port to that of the pilot port with the highest power is fed back. Specifically, as shown in Table 4, a magnitude order of an amplitude or power is indicated at first, and then a coefficient at the magnitude order is indicated. The coefficient may be uniformly quantized. The phase difference information may be uniformly quantized from 0 to $2\pi$ and fed back.

Table 4

| 00 | $10^{-0.5}$ |
|----|-------------|
| 01 | $10^{-1}$ |
| 10 | $10^{-1.5}$ |
| 11 | $10^{-2}$ |

Here, when the beam weights are DFT vectors, the received power information and the phase difference information are specifically amplitude and phase difference information of the multiple paths. The base station may restructure the beam weights further for optimal precoding on the basis of the received channel information.

Fig. 2 is a flowchart showing a pilot transmission method according to embodiment 2 of the present disclosure. The pilot transmission method in the example is applied to a base station. As shown in Fig. 2, the pilot transmission method in the example includes the following steps:

Step 201: a base station transmits M types of pilot signals, the M types of pilot signals corresponding to M pilot ports respectively; and
Step 202: the base station configures N pilot ports in the M pilot ports for a terminal through signalling, M being a positive integer and N being a positive integer smaller than M.

Preferably, the method further includes that:

virtualization is performed to form the N pilot ports through the same group of antennas, wherein each pilot port in the N pilot ports corresponds to a set of virtualized precoding weights.

Preferably, the method further includes that:

the base station determines the N pilot ports according to channel statistic information fed back by the terminal, wherein the channel statistic information is information of a correlation matrix; and the virtualized precoding weights corresponding to the N pilot ports are characteristic vectors of the correlation matrix.

Preferably, the virtualized precoding weights corresponding to the N pilot ports are: DFT vectors $v_k$, or Kronecker products $f(v_k, v_l)$ of the DFT vectors, wherein

$$v_k = \begin{bmatrix} 1 & e^{j\phi_k} & ... & e^{j(n-1)\phi_k} \end{bmatrix}^H$$

$$f(v_k, v_l) = v_k \otimes v_l \quad \text{or} \quad f(v_k, v_l) = \begin{bmatrix} v_k \\ v_l \end{bmatrix},$$

where k and l are positive *integers, j* is an imaginary *unit, n* is a positive integer more than 1 and $\phi_k$ is a phase parameter; and $[\ ]^H$ represents a conjugate transpose operation and $\otimes$ is a Kronecker product symbol.

Preferably, the method further includes that:

the base station configures the N pilot ports in the M pilot ports for the terminal according to terminal information reported by the terminal.

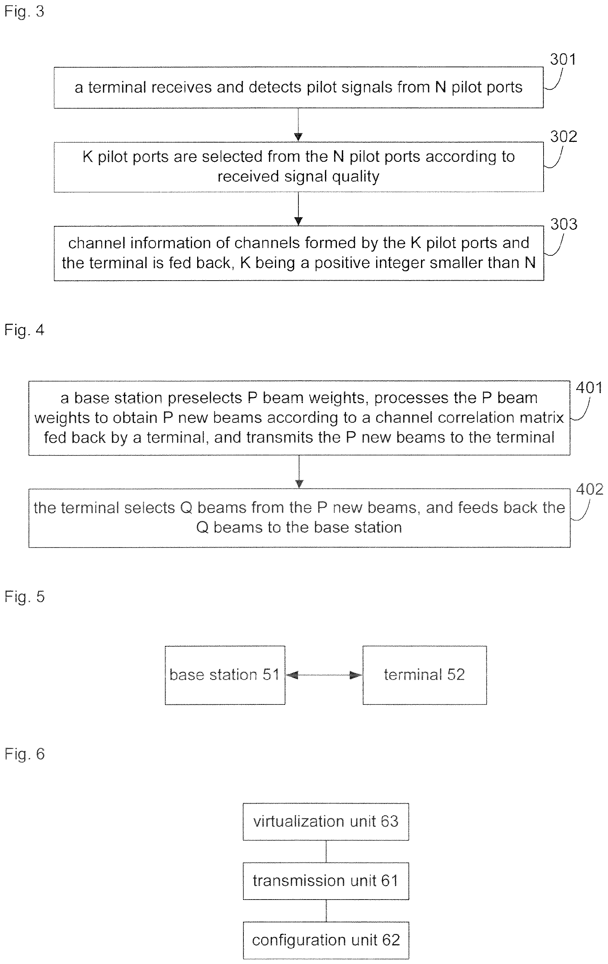

Fig. 3 is a flowchart showing a channel information feedback method according to embodiment 3 of the present disclosure. The channel information feedback method in the example is applied to a terminal. As shown in Fig. 3, the channel information feedback method in the example includes the following steps.

Step 301: a terminal receives and detects pilot signals from N pilot ports configured by a base station.

Step 302: K pilot ports are selected from the N pilot ports according to received signal quality.

Preferably, the method further includes that:

the terminal selects the K pilot ports from the N pilot ports according to a power threshold configured by the base station, wherein the power threshold is a relative threshold or an absolute threshold.

Step 303: channel information of channels formed by the K pilot ports and the terminal is fed back, K being a positive integer smaller than N.

Preferably, the channel information includes at least one of: index information of the K pilot ports, amplitude proportion information among the K pilot ports, phase difference information among the K pilot ports, received power information of the K pilot ports and signal to interference plus noise ratio information of the K pilot ports.

Preferably, the method further includes that:

the terminal feeds back selection information of the pilot ports, the selection information of the pilot ports being jointly coded by the number of the selected pilot ports and the identifiers of the selected pilot ports, wherein selection probabilities of different pilot ports are different, and different numbers of the pilot ports correspond to different status bits.

Preferably, the method further includes that:

virtualization is performed to form the K pilot ports through the same group of antennas, wherein each pilot port in the K pilot ports corresponds to a set of virtualized precoding weights.

Fig. 4 is a flowchart showing a beam transmission method according to embodiment 4 of the present disclosure.

The beam transmission method in the example is applied to a beam transmission system, and as shown in Fig. 4, the beam transmission method in the example includes the following steps.

Step 401: a base station preselects P beam weights, processes the P beam weights to obtain P new beams according to a channel correlation matrix fed back by a terminal, and transmits the P new beams to the terminal.

Preferably, the channel correlation matrix is a superposition and combination of correlation matrix information of multiple terminals.

Specifically, more than one received channel correlation sub-matrix is superposed to obtain the channel correlation matrix; and

signals corresponding to multiple transmission antennas are precoded to obtain M types of pilot signals according to characteristic vectors of the channel correlation matrix.

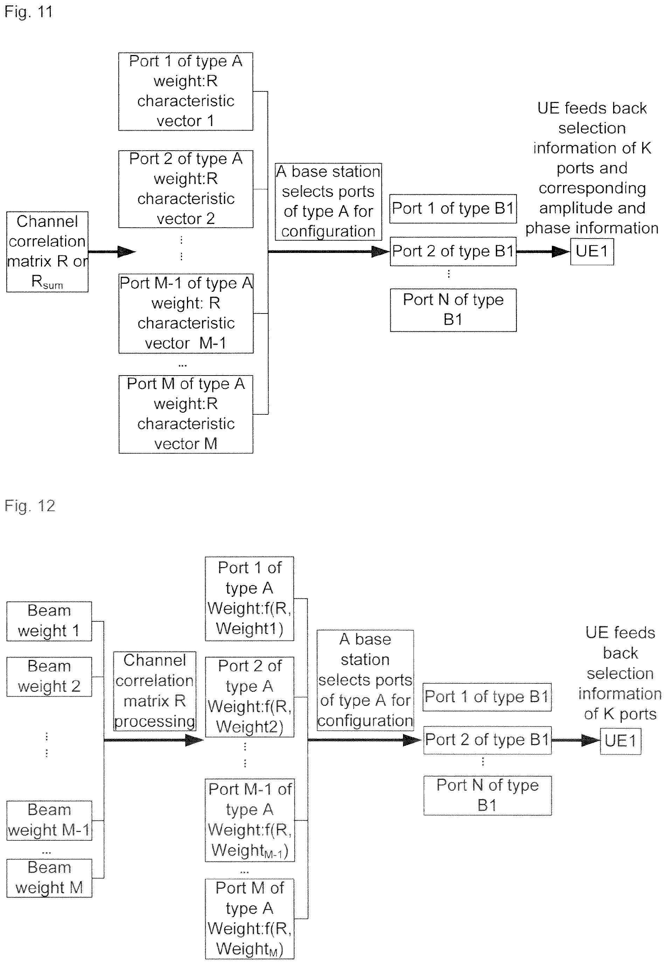

Specifically, referring to Fig. 11, the preset beam weights may also be channel correlation matrix. The base station receives channel correlation sub-matrixes fed back by more than one UE and superposes the more than one channel correlation sub-matrix to obtain a channel correlation matrix R. Here, the channel correlation sub-matrix is channel correlation matrix information of the terminal, such as information of each element of the channel correlation matrix R, characteristic value information of the channel correlation matrix R and characteristic vector information of the channel correlation matrix R.

When the beam weights are channel correlation matrixes R, the base station superposes the correlation matrixes R to restructure the beam weights further for optimal precoding on the basis of received channel information sent by more than one terminal.

Specifically, referring to Fig. 12, the base station preselects the P beam weights, and the P beam weights may be some uniform weights, that is, chordal distances are required to be more than a threshold, such as 0.9. The P selected beam weights may be some DFT vectors, and may also be some uniform vectors in an Nt-dimensional space generated by the Grassmanian method.

The terminal feeds back a corresponding channel correlation sub-matrix. The channel correlation sub-matrix is measured by the terminal. The base station may take a channel correlation sub-matrix of a terminal or a superposed value R of channel correlation sub-matrixes of multiple terminals as a beam weight rotation matrix, multiply the beam weight rotation matrix by the P selected beam weights and then perform normalization power processing.

After rotation, the P uniform beams may be regulated to distribute according to correlation in R, wherein beams of part of subspaces are denser and beams of part of subspaces are sparse. Characteristic vectors of the terminal are mainly positioned in the subspaces where the beams are denser.

The terminal selects and reports information corresponding to one or more optimal pilot ports in the received pilot signals to the base station. The base station may find the corresponding pilot ports and the corresponding beam weights according to the port information reported by the terminal and perform precoding by means of the beam weights.

Preferably, the P beam weights are: P DFT vectors or functions of two DFT vectors.

Step 402: the terminal selects Q beams from the P new beams, and feeds back the Q beams to the base station.

Fig. 5 is a structural diagram illustrating a channel information feedback system according to embodiment 1 of the present disclosure. As shown in Fig. 5, the system includes a base station 51 and a terminal 52, wherein the base station 51 is configured to transmit M types of pilot signals, the M types of pilot signals corresponding to M pilot ports respectively, and configure N pilot ports in the M pilot ports for the terminal 52 through signalling, M being a positive integer and N being a positive integer smaller than M; and

the terminal 52 is configured to receive and detect the pilot signals from the N pilot ports, select K pilot ports from the N pilot ports according to received signal quality, and feed back channel information of channels formed by the K pilot ports and the terminal, K being a positive integer smaller than N.

Preferably, the channel information includes at least one of: index information of the K pilot ports, amplitude proportion information among the K pilot ports, phase difference information among the K pilot ports, received power information of the K pilot ports and signal to interference plus noise ratio information of the K pilot ports.

Preferably, the terminal 52 is further configured to perform virtualization to form the K pilot ports through the same group of antennas, wherein each pilot port in the K pilot ports corresponds to a set of virtualized precoding weights.

Preferably, the base station 51 is further configured to perform virtualization to form the N pilot ports through the same group of antennas, wherein each pilot port in the N pilot ports corresponds to a set of virtualized precoding weights.

Preferably, the base station 51 is further configured to determine the N pilot ports according to channel statistic information fed back by the terminal 52, wherein the channel statistic information is information of a correlation matrix; and the virtualized precoding weights corresponding to the N pilot ports are characteristic vectors of the correlation matrix.

Preferably, the virtualized precoding weights corresponding to the N pilot ports are: DFT vectors $v_k$, or Kronecker products $f(v_k, v_l)$ of the DFT vectors, wherein

$$v_k = \begin{bmatrix} 1 & e^{j\phi_k} & \dots & e^{j(n-1)\phi_k} \end{bmatrix}^H$$

$$f(v_k, v_l) = v_k \otimes v_l \quad \text{or} \quad f(v_k, v_l) = \begin{bmatrix} v_k \\ v_l \end{bmatrix},$$

where *k* and *l* are positive *integers, j* is an imaginary *unit, n* is a positive integer more than 1 and $\phi_k$ is a phase parameter; and [ ]$^H$ represents a conjugate transpose operation and $\otimes$ is a Kronecker product symbol.

Preferably, the terminal 52 is further configured to select the K pilot ports from the N pilot ports according to a power threshold configured by the base station 51, wherein the power threshold is a relative threshold or an absolute threshold.

Preferably, the base station 51 is further configured to configure the N pilot ports in the M pilot ports for the terminal 52 according to terminal 52 information reported by the terminal 52.

Preferably, the terminal 52 is further configured to feed back selection information of the pilot ports, the selection information of the pilot ports being jointly coded by the number of the selected pilot ports and identifiers of the selected pilot ports, wherein selection probabilities of different pilot ports are different, and different numbers of the pilot ports correspond to different status bits.

Those skilled in the art should know that functions realized by the base station 51 and the terminal 52 in the channel information feedback system shown in Fig. 5 may be understood with reference to related descriptions made in the abovementioned channel information feedback method.

Fig. 6 is a structural diagram illustrating a base station according to embodiment 2 of the present disclosure. As shown in Fig. 6, the base station includes a transmission unit 61 and a configuration unit 62, wherein the transmission unit 61 is configured to transmit M types of pilot signals, the M types of pilot signals corresponding to M pilot ports respectively; and

the configuration unit 62 is configured to configure N pilot ports in the M pilot ports for a terminal through signalling, M being a positive integer and N being a positive integer smaller than M.

Preferably, the base station further includes a virtualization unit 63, configured to perform virtualization to form the N pilot ports through the same group of antennas, wherein each pilot port in the N pilot ports corresponds to a set of virtualized precoding weights.

Preferably, the configuration unit 62 is further configured to determine the N pilot ports according to channel statistic information fed back by the terminal, wherein the channel statistic information is information of a correlation matrix; and the virtualized precoding weights corresponding to the N pilot ports are characteristic vectors of the correlation matrix.

Preferably, the virtualized precoding weights corresponding to the N pilot ports are: DFT vectors $v_k$, or Kronecker products $f(v_k, v_l)$ of the DFT vectors, wherein

$$v_k = \begin{bmatrix} 1 & e^{j\phi_k} & \dots & e^{j(n-1)\phi_k} \end{bmatrix}^H$$

$$f(v_k, v_l) = v_k \otimes v_l \quad \text{or} \quad f(v_k, v_l) = \begin{bmatrix} v_k \\ v_l \end{bmatrix},$$

where *k* and *l* are positive *integers, j* is an imaginary *unit, n* is a positive integer more than 1 and $\phi_k$ is a phase parameter; and [ ]$^H$ represents a conjugate transpose operation and $\otimes$ is a Kronecker product symbol.

Preferably, the configuration unit 62 is further configured to configure the N pilot ports in the M pilot ports for the terminal according to terminal information reported by the terminal.

Those skilled in the art should know that functions realized by each unit in the base station shown in Fig. 6 may be understood with reference to related descriptions made in the abovementioned pilot transmission method.

In practice, the transmission unit 61, the configuration unit 62 and the virtualization unit 63 in the base station may be implemented by a Central Processing Unit (CPU), or Digital Signal Processor (DPS) or Field-Programmable Gate Array (FPGA) in the base station.

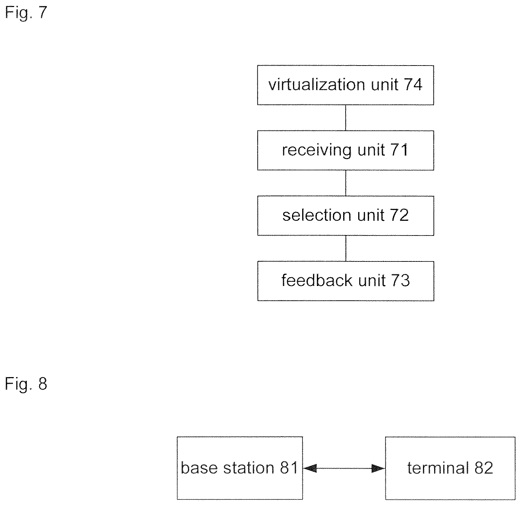

Fig. 7 is a structural diagram illustrating a terminal according to embodiment 3 of the present disclosure. As shown in Fig. 7, the terminal includes a receiving unit 71, a selection unit 72 and a feedback unit 73, wherein

the receiving unit 71 is configured to receive and detect pilot signals from N pilot ports configured by a base station;
the selection unit 72 is configured to select K pilot ports from the N pilot ports according to received signal quality; and
the feedback unit 73 is configured to feed back channel information of channels formed by the K pilot ports and the terminal, K being a positive integer smaller than N.

Preferably, the channel information includes at least one of: index information of the K pilot ports, amplitude proportion information among the K pilot ports, phase difference information among the K pilot ports, received power information of the K pilot ports and signal to interference plus noise ratio information of the K pilot ports.

Preferably, the selection unit 72 is further configured to select the K pilot ports from the N pilot ports according to a power threshold configured by the base station, wherein the power threshold is a relative threshold or an absolute threshold.

Preferably, the feedback unit 73 is further configured to feed back selection information of the pilot ports, the selection information of the pilot ports being jointly coded by the number of the selected pilot ports and identifiers of the selected pilot ports, wherein selection probabilities of different pilot ports are different, and different numbers of the pilot ports correspond to different status bits.

Preferably, the terminal further includes a virtualization unit 74, configured to perform virtualization to form the K pilot ports through the same group of antennas, wherein each pilot port in the K pilot ports corresponds to a set of virtualized precoding weights.

Those skilled in the art should know that functions realized by each unit in the terminal shown in Fig. 7 may be understood with reference to related descriptions made in the abovementioned channel information feedback method.

In practice, the receiving unit 71, the selection unit 72, the feedback unit 73 and the virtualization unit 74 in the terminal may be implemented by a CPU, or DSP or FPGA in the terminal.

Fig. 8 is a structural diagram illustrating a beam transmission system according to embodiment 4 of the present disclosure. As shown in Fig. 8, the system includes a base station 81 and a terminal 82, wherein
the base station 81 is configured to preselect P beam weights, process the P beam weights to obtain P new beams according to a channel correlation matrix fed back by the terminal 82, and transmit the P new beams to the terminal 82; and
the terminal 82 is configured to select Q beams from the P new beams, and feed back the Q beams to the base station 81.

Preferably, the channel correlation matrix is a superposition and combination of correlation matrix information of multiple terminals 82.

Preferably, the P beam weights are: P DFT vectors or functions of two DFT vectors.

Those skilled in the art should know that functions realized by the base station 81 and the terminal 82 in the beam transmission system shown in Fig. 8 may be understood with reference to related descriptions made in the abovementioned beam transmission method.

In some embodiments provided by the present disclosure, it should be understood that the disclosed devices and methods may be implemented in other forms. The device embodiments described above are only illustrative. For example, the units are distinguished in a logic function way, and other ways may be adopted in practice. For example, multiple units or components may be combined or integrated into another system. Alternatively, some characteristics may be omitted or not executed. In addition, coupling or direct coupling or communication connection between respective displayed or discussed components may be indirect coupling or communication connection implemented through some interfaces. Indirect coupling or communication connection among devices or units may be electrical, mechanical connection or in other forms.

The units described as separate parts may or may not be physically separated, and parts displayed as units may or may not be physical units. Namely, these units may be located in the same place, or may also be distributed to multiple network units. Part or all of the units may be selected to achieve the solutions of the embodiments based on the actual demand.

In addition, each function unit in each embodiment of the present disclosure may be integrated into a processing unit, each unit may also exist independently, and two or more than two units may also be integrated into one single unit. The integrated unit may be implemented in a hardware form, and may also be implemented in a form of combining hardware and software function unit.

Those skilled in the art should know that all or part of the steps of the method embodiments may be implemented by related hardware instructed through a program, the program may be stored in a computer-readable storage medium, and the program is executed to execute the steps of the method embodiments. The storage medium includes various media capable of storing program codes, such as mobile storage equipment, a Random Access Memory (RAM), a Read-Only Memory (ROM), a magnetic disk or a compact disc.

Alternatively, when being implemented in a form of software function unit and sold or used as an independent product, the integrated unit of the present disclosure may also be stored in a computer-readable storage medium. Based on this understanding, the technical solutions of the embodiments of the present disclosure substantially or those parts making contributions to the related technology may be embodied in a form of software product, and the computer software product is stored in a storage medium, including a plurality of instructions configured to enable computer equipment (which may be a personal computer, a server, network equipment or the like) to execute all or part of the method of each embodiment of the present disclosure. The storage medium includes various media capable of storing program codes such as mobile storage equipment, a RAM, a ROM, a magnetic disk or a compact disc.

The above is only the specific implementation mode of the present disclosure and not intended to limit the scope of protection of the present disclosure, and any variations or replacements apparent to those skilled in the art within the technical scope of the present disclosure shall fall within the scope of protection of the present disclosure. Therefore, the scope of protection of the present disclosure shall be in accordance with the scope of protection of the claims.

The above is only the preferred embodiments of the present disclosure and not intended to limit the scope of protection of the present disclosure.

**Claims**

1. A channel information feedback method, comprising:

   transmitting, by a base station, M types of pilot signals, the M types of pilot signals corresponding to M pilot ports respectively; configuring N pilot ports in the M pilot ports for a terminal through signalling, M being a positive integer and N being a positive integer smaller than M; and

   receiving and detecting, by the terminal, the pilot signals from the N pilot ports, selecting K pilot ports from the N pilot ports according to received signal quality, and feeding back channel information of channels formed by the K pilot ports and the terminal, K being a positive integer smaller than N.

2. The channel information feedback method according to claim 1, wherein the channel information comprises at least one of: index information of the K pilot ports, amplitude proportion information among the K pilot ports, phase difference information among the K pilot ports, received power information of the K pilot ports and signal to interference plus noise ratio information of the K pilot ports.

3. The channel information feedback method according to claim 1, further comprising:

   performing virtualization to form the K pilot ports through the same group of antennas, wherein each pilot port in the K pilot ports corresponds to a set of virtualized precoding weights.

4. The channel information feedback method according to claim 1, further comprising:

   performing virtualization to form the N pilot ports through the same group of antennas, wherein each pilot port in the N pilot ports corresponds to a set of virtualized precoding weights.

5. The channel information feedback method according to claim 4, further comprising:

   determining, by the base station, the N pilot ports according to channel statistic information fed back by the terminal, wherein the channel statistic information is information of a correlation matrix; and the virtualized precoding weights corresponding to the N pilot ports are characteristic vectors of the correlation matrix.

6. The channel information feedback method according to claim 1, wherein the virtualized precoding weights corresponding to the N pilot ports are: Discrete Fourier Transform (DFT) vectors $v_k$, or Kronecker products $f(v_k, v_l)$ of the DFT vectors, wherein

$$v_k = \begin{bmatrix} 1 & e^{j\phi_k} & ... & e^{j(n-1)\phi_k} \end{bmatrix}^H$$

$$f(v_k, v_l) = v_k \otimes v_l \quad \text{or} \quad f(v_k, v_l) = \begin{bmatrix} v_k \\ v_l \end{bmatrix},$$

where $k$ and $l$ are positive *integers, j* is an imaginary *unit, n* is a positive integer more than 1 and $\phi_k$ is a phase

parameter; and [ ]$^H$ represents a conjugate transpose operation and $\otimes$ is a Kronecker product symbol.

**7.** The channel information feedback method according to claim 1, further comprising:

selecting, by the terminal, the K pilot ports from the N pilot ports according to a power threshold configured by the base station, wherein the power threshold is a relative threshold or an absolute threshold.

**8.** The channel information feedback method according to claim 1, further comprising:

configuring, by the base station, the N pilot ports in the M pilot ports for the terminal according to terminal information reported by the terminal.

**9.** The channel information feedback method according to any one of claims 1 to 8, further comprising:

feeding back, by the terminal, selection information of the pilot ports, the selection information of the pilot ports being jointly coded by the number of the selected pilot ports and identifiers of the selected pilot ports, wherein selection probabilities of different pilot ports are different, and different numbers of the pilot ports correspond to different status bits.

**10.** A pilot transmission method, comprising:

transmitting, by a base station, M types of pilot signals, the M types of pilot signals corresponding to M pilot ports respectively; and configuring N pilot ports in the M pilot ports for a terminal through signalling, M being a positive integer and N being a positive integer smaller than M.

**11.** The pilot transmission method according to claim 10, further comprising:

performing virtualization to form the N pilot ports through the same group of antennas, wherein each pilot port in the N pilot ports corresponds to a set of virtualized precoding weights.

**12.** The pilot transmission method according to claim 10, further comprising:

determining, by the base station, the N pilot ports according to channel statistic information fed back by the terminal, wherein the channel statistic information is information of a correlation matrix; and the virtualized precoding weights corresponding to the N pilot ports are characteristic vectors of the correlation matrix.

**13.** The pilot transmission method according to claim 10, wherein the virtualized precoding weights corresponding to the N pilot ports are: Discrete Fourier Transform (DFT) vectors $v_k$, or Kronecker products $f(v_k, v_l)$ of the DFT vectors, wherein

$$v_k = \begin{bmatrix} 1 & e^{j\phi_k} & \dots & e^{j(n-1)\phi_k} \end{bmatrix}^H$$

$$f(v_k, v_l) = v_k \otimes v_l \text{ or } f(v_k, v_l) = \begin{bmatrix} v_k \\ v_l \end{bmatrix},$$

*where k and l are positive integers, j is an imaginary unit, n is a positive integer more than 1 and $\phi_k$ is a phase parameter;* and [ ]$^H$ represents a conjugate transpose operation and $\otimes$ is a Kronecker product symbol.

**14.** The pilot transmission method according to any one of claims 10 to 13, further comprising:

configuring, by the base station, the N pilot ports in the M pilot ports for the terminal according to terminal information reported by the terminal.

**15.** A channel information feedback method, comprising:

receiving and detecting, by a terminal, pilot signals from N pilot ports configured by a base station, selecting K pilot ports from the N pilot ports according to received signal quality, and feeding back channel information of channels formed by the K pilot ports and the terminal, K being a positive integer smaller than N.

16. The channel information feedback method according to claim 15, wherein the channel information comprises at least one of: index information of the K pilot ports, amplitude proportion information among the K pilot ports, phase difference information among the K pilot ports, received power information of the K pilot ports and signal to interference plus noise ratio information of the K pilot ports.

17. The channel information feedback method according to claim 15, further comprising:

selecting, by the terminal, the K pilot ports from the N pilot ports according to a power threshold configured by the base station, wherein the power threshold is a relative threshold or an absolute threshold.

18. The channel information feedback method according to claim 15, further comprising:

feeding back, by the terminal, selection information of the pilot ports, the selection information of the pilot ports being jointly coded by the number of the selected pilot ports and identifiers of the selected pilot ports, wherein selection probabilities of different pilot ports are different, and different numbers of the pilot ports correspond to different status bits.

19. The channel information feedback method according to any one of claims 15 to 18, further comprising:

performing virtualization to form the K pilot ports through the same group of antennas, wherein each pilot port in the K pilot ports corresponds to a set of virtualized precoding weights.

20. A beam transmission method, comprising:

preselecting, by a base station, P beam weights, processing the P beam weights to obtain P new beams according to a channel correlation matrix fed back by a terminal, and transmitting the P new beams to the terminal; and
selecting, by the terminal, Q beams from the P new beams, and feeding back the Q beams to the base station.

21. The beam transmission method according to claim 20, wherein the channel correlation matrix is a superposition and combination of correlation matrix information of multiple terminals.

22. The beam transmission method according to claim 20 or 21, wherein the P beam weights are: P Discrete Fourier Transform (DFT) vectors or functions of two DFT vectors.

23. A channel information feedback system, comprising: a base station and a terminal, wherein
the base station is configured to transmit M types of pilot signals, the M types of pilot signals corresponding to M pilot ports respectively, and configure N pilot ports in the M pilot ports for the terminal through signalling, M being a positive integer and N being a positive integer smaller than M; and
the terminal is configured to receive and detect the pilot signals from the N pilot ports, select K pilot ports from the N pilot ports according to received signal quality, and feed back channel information of channels formed by the K pilot ports and the terminal, K being a positive integer smaller than N.

24. The channel information feedback system according to claim 23, wherein the channel information comprises at least one of: index information of the K pilot ports, amplitude proportion information among the K pilot ports, phase difference information among the K pilot ports, received power information of the K pilot ports and signal to interference plus noise ratio information of the K pilot ports.

25. The channel information feedback system according to claim 23, wherein the terminal is further configured to perform virtualization to form the K pilot ports through the same group of antennas, wherein each pilot port in the K pilot ports corresponds to a set of virtualized precoding weights.

26. The channel information feedback system according to claim 23, wherein the base station is further configured to perform virtualization to form the N pilot ports through the same group of antennas, wherein each pilot port in the N pilot ports corresponds to a set of virtualized precoding weights.

**27.** The channel information feedback system according to claim 26, wherein the base station is further configured to determine the N pilot ports according to channel statistic information fed back by the terminal, wherein the channel statistic information is information of a correlation matrix; and the virtualized precoding weights corresponding to the N pilot ports are characteristic vectors of the correlation matrix.

**28.** The channel information feedback system according to claim 23, wherein the virtualized precoding weights corresponding to the N pilot ports are: Discrete Fourier Transform (DFT) vectors $v_k$, or Kronecker products $f(v_k, v_l)$ of the DFT vectors, wherein

$$v_k = \begin{bmatrix} 1 & e^{j\phi_k} & \dots & e^{j(n-1)\phi_k} \end{bmatrix}^H$$

$$f(v_k, v_l) = v_k \otimes v_l \quad \text{or} \quad f(v_k, v_l) = \begin{bmatrix} v_k \\ v_l \end{bmatrix},$$

where $k$ and $l$ are positive *integers, j* is an imaginary *unit, n* is a positive integer more than 1 and $\phi_k$ is a phase parameter; and $[\,]^H$ represents a conjugate transpose operation and $\otimes$ is a Kronecker product symbol.

**29.** The channel information feedback system according to claim 23, wherein the terminal is further configured to select the K pilot ports from the N pilot ports according to a power threshold configured by the base station, wherein the power threshold is a relative threshold or an absolute threshold.

**30.** The channel information feedback system according to claim 23, wherein the base station is further configured to configure the N pilot ports in the M pilot ports for the terminal according to terminal information reported by the terminal.

**31.** The channel information feedback system according to any one of claims 23 to 30, wherein the terminal is further configured to feed back selection information of the pilot ports, the selection information of the pilot ports being jointly coded by the number of the selected pilot ports and identifiers of the selected pilot ports, wherein selection probabilities of different pilot ports are different, and different numbers of the pilot ports correspond to different status bits.

**32.** A base station, comprising: a transmission unit and a configuration unit, wherein
the transmission unit is configured to transmit M types of pilot signals, the M types of pilot signals corresponding to M pilot ports respectively; and
the configuration unit is configured to configure N pilot ports in the M pilot ports for a terminal through signalling, M being a positive integer and N being a positive integer smaller than M.

**33.** The base station according to claim 32, further comprising: a virtualization unit, configured to perform virtualization to form the N pilot ports through the same group of antennas, wherein each pilot port in the N pilot ports corresponds to a set of virtualized precoding weights.

**34.** The base station according to claim 32, wherein the configuration unit is further configured to determine the N pilot ports according to channel statistic information fed back by the terminal, wherein the channel statistic information is information of a correlation matrix; and the virtualized precoding weights corresponding to the N pilot ports are characteristic vectors of the correlation matrix.

**35.** The base station according to claim 32, wherein the virtualized precoding weights corresponding to the N pilot ports are: Discrete Fourier Transform (DFT) vectors $v_k$, or Kronecker products $f(v_k, v_l)$ of the DFT vectors, wherein

$$v_k = \begin{bmatrix} 1 & e^{j\phi_k} & \dots & e^{j(n-1)\phi_k} \end{bmatrix}^H$$

$$f\left(v_k,v_l\right) = v_k \otimes v_l \ \text{ or } \ f\left(v_k,v_l\right) = \begin{bmatrix} v_k \\ v_l \end{bmatrix},$$

where *k* and *l* are positive *integers, j* is an imaginary *unit, n* is a positive integer more than 1 and $\phi_k$ is a phase parameter; and [ ]$^H$ represents conjugate transpose operation and $\otimes$ is a Kronecker product symbol.

**36.** The base station according to any one of claims 32 to 35, wherein the configuration unit is further configured to configure the N pilot ports in the M pilot ports for the terminal according to terminal information reported by the terminal.

**37.** A terminal, comprising: a receiving unit, a selection unit and a feedback unit, wherein
the receiving unit is configured to receive and detect pilot signals from N pilot ports configured by a base station;
the selection unit is configured to select K pilot ports from the N pilot ports according to received signal quality; and
the feedback unit is configured to feed back channel information of channels formed by the K pilot ports and the terminal, K being a positive integer smaller than N.

**38.** The terminal according to claim 37, wherein the channel information comprises at least one of: index information of the K pilot ports, amplitude proportion information among the K pilot ports, phase difference information among the K pilot ports, received power information of the K pilot ports and signal to interference plus noise ratio information of the K pilot ports.

**39.** The terminal according to claim 37, wherein the selection unit is further configured to select the K pilot ports from the N pilot ports according to a power threshold configured by the base station, wherein the power threshold is a relative threshold or an absolute threshold.

**40.** The terminal according to claim 37, wherein the feedback unit is further configured to feed back selection information of the pilot ports, the selection information of the pilot ports being jointly coded by the number of the selected pilot ports and identifiers of the selected pilot ports, wherein selection probabilities of different pilot ports are different, and different numbers of the pilot ports correspond to different status bits.

**41.** The terminal according to any one of claims 37 to 40, further comprising: a virtualization unit, configured to perform virtualization to form the K pilot ports through the same group of antennas, wherein each pilot port in the K pilot ports corresponds to a set of virtualized precoding weights.

**42.** A beam transmission system, comprising: a base station and a terminal, wherein
the base station is configured to preselect P beam weights, process the P beam weights to obtain P new beams according to a channel correlation matrix fed back by the terminal, and send the P new beams to the terminal; and
the terminal is configured to select Q beams from the P new beams, and feed back the Q beams to the base station.

**43.** The beam transmission system according to claim 42, wherein the channel correlation matrix is a superposition and combination of correlation matrix information of multiple terminals.

**44.** The beam transmission system according to claim 42 or 43, wherein the P beam weights are: P Discrete Fourier Transform (DFT) vectors or functions of two DFT vectors.

Fig. 1

a base station transmits M types of pilot signals, the M types of pilot signals corresponding to M pilot ports respectively — 101

the base station configures N pilot ports in the M pilot ports for a terminal through signalling, M being a positive integer and N being a positive integer smaller than M — 102

the terminal receives and detects the pilot signals from the N pilot ports — 103

the terminal selects K pilot ports from the N pilot ports according to received signal quality, and feeds back channel information of channels formed by the K pilot ports and the terminal, K being a positive integer smaller than N — 104

Fig. 2

a base station transmits M types of pilot signals, the M types of pilot signals corresponding to M pilot ports respectively — 201

the base station configures N pilot ports in the M pilot ports for a terminal through signalling, M being a positive integer and N being a positive integer smaller than M — 202

Fig. 3

```
                                                                        301
┌─────────────────────────────────────────────────────────────┐   ╭┘
│   a terminal receives and detects pilot signals from N pilot ports │
└─────────────────────────────────────────────────────────────┘
                              │
                              ▼
                                                                        302
┌─────────────────────────────────────────────────────────────┐   ╭┘
│   K pilot ports are selected from the N pilot ports according to   │
│                    received signal quality                          │
└─────────────────────────────────────────────────────────────┘
                              │
                              ▼
                                                                        303
┌─────────────────────────────────────────────────────────────┐   ╭┘
│  channel information of channels formed by the K pilot ports and    │
│  the terminal is fed back, K being a positive integer smaller than N │
└─────────────────────────────────────────────────────────────┘
```

Fig. 4

```
                                                                        401
┌─────────────────────────────────────────────────────────────┐   ╭┘
│     a base station preselects P beam weights, processes the P beam  │
│  weights to obtain P new beams according to a channel correlation matrix │
│   fed back by a terminal, and transmits the P new beams to the terminal │
└─────────────────────────────────────────────────────────────┘
                              │
                              ▼
                                                                        402
┌─────────────────────────────────────────────────────────────┐   ╭┘
│  the terminal selects Q beams from the P new beams, and feeds back the │
│                    Q beams to the base station                      │
└─────────────────────────────────────────────────────────────┘
```

Fig. 5

```
┌──────────────────┐              ┌──────────────────┐
│  base station 51 │◄───────────►│   terminal 52    │
└──────────────────┘              └──────────────────┘
```

Fig. 6

```
        ┌──────────────────────────┐
        │   virtualization unit 63 │
        └──────────────────────────┘
                      │
        ┌──────────────────────────┐
        │   transmission unit 61   │
        └──────────────────────────┘
                      │
        ┌──────────────────────────┐
        │   configuration unit 62  │
        └──────────────────────────┘
```

Fig. 7

```
┌──────────────────────────┐
│  virtualization unit 74  │
└──────────────────────────┘
             │
┌──────────────────────────┐
│    receiving unit 71     │
└──────────────────────────┘
             │
┌──────────────────────────┐
│    selection unit 72     │
└──────────────────────────┘
             │
┌──────────────────────────┐
│    feedback unit 73      │
└──────────────────────────┘
```

Fig. 8

```
┌──────────────────┐              ┌──────────────────┐
│ base station 81  │◄────────────►│   terminal 82    │
└──────────────────┘              └──────────────────┘
```

Fig. 9

Feedback of selection
information of K1 ports

Feedback of K1-dimensional
channel state information

| Port 1 of type A
Weight:$v_1$ |

| Port 2 of type A
Weight:$v_2$ |

base
station

Nt antennas

A base station
selects ports
of type A for
configuration

| Port 1 of type B1 |

| Port 2 of type B1 |

| Port N1 of type
B1 |

UE selects
K1 ports for
feedback

Logical
channel H:
Nr x K1

Nr antennas

UE1

| Port M-1 of type A
Weight:$v_{M-1}$ |

...

| Port M of type A
Weight:$v_M$ |

The base
station selects
the ports of
type A for
configuration

| Port 1 of type B2 |

| Port 2 of type B2 |

| Port N2 of type
B2 |

UE selects
K2 ports for
feedback

Logical
channel H:
Nr x K2

Nr antennas

UE2

Feedback of selection
information of K2 ports

Feedback of K2-dimensional
channel state information

Fig. 10

| Port 1 of type A
weight:DFT
vector1 |

| Port 1 of type A
weight:DFT
vector2 |

| Port M-1 of type
A
weight:DFT
vectorM-1 |

...

| Port M of type A
weight:DFT
vectorM |

A base station
selects ports
of type A for
configuration

| Port 1 of type B1
weight:DFT
vector $i_1$ |

| Port 2 of type B1
weight:DFT
vector $i_2$ |

| Port N of type B1
weight:DFT
vector $i_N$ |

UE feeds back selection
information of K ports and
corresponding amplitude
and phase information

UE1

Fig. 11

Port 1 of type A
weight:R
characteristic
vector 1

Port 2 of type A
weight:R
characteristic
vector 2

⋮
⋮

Channel
correlation
matrix R or
$R_{sum}$

A base station
selects ports
of type A for
configuration

Port 1 of type B1

Port 2 of type B1

⋮

Port N of type
B1

Port M-1 of type A
weight: R
characteristic
vector  M-1

...

Port M of type A
weight:R
characteristic
vector M

UE feeds back
selection
information of K
ports and
corresponding
amplitude and
phase information

UE1

Fig. 12

Beam
weight 1

Beam
weight 2

⋮
⋮

Channel
correlation
matrix R
processing

Port 1 of
type A
Weight:f(R,
Weight1)

Port 2 of
type A
Weight:f(R,
Weight2)

⋮
⋮

A base
station
selects ports
of type A for
configuration

Port 1 of type B1

Port 2 of type B1

⋮

Port N of type
B1

UE feeds
back
selection
information
of K ports

UE1

Beam
weight M-1

...

Beam
weight M

Port M-1 of
type A
Weight:f(R,
$Weight_{M-1}$)

...

Port M of
type A
Weight:f(R,
$Weight_{M}$)